Europäisches Patentamt

European Patent Office

Office européen des brevets

(11) Publication number: **0 197 163**
**A1**

# EUROPEAN PATENT APPLICATION

(21) Application number: **85103880.2**

(22) Date of filing: **01.04.85**

(51) Int. Cl.⁴: **B 62 K 15/00**

(43) Date of publication of application:
**15.10.86** Bulletin **86/42**

(84) Designated Contracting States:
**AT BE CH DE FR GB LI LU NL SE**

(71) Applicant: **QUASAR S.r.l.**
**Via Bagetti, 31**
**I-10138 Torino(IT)**

(72) Inventor: **Cammarata, Italo**
**Via Mont Cervet, 46**
**I-10025 Pino Torinese Torino(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Collapsible vehicle, particularly of the two-wheeled type.

(57) This invention relates to a collapsible vehicle particularly of the two-wheeled type, which comprises a main frame (1) supporting at least one rear wheel (2) and a steering column (3) pivotally connected to the cited frame (1) and supporting at least one front wheel (5). The pecularity of the invention is that it comprises a saddle (13) holder (10) which encloses said frame (1) laterally and is connected to the frame (1). The holder (10) can be tilted towards the cited frame (1) to bring the saddle (13) forward of the frame (1). The upper section (30) of the column (3) is connected to the column (3) to permit tilting toward said frame (1) and handle bar (50) sections (55) are connected to the upper column section (30) for tilting against the upper column section (30).

Fig.1

# COLLAPSIBLE VEHICLE, PARTICULARLY OF THE TWO-WHEELED TYPE

This invention relates to a collapsible vehicle, particularly of the two-wheeled type.

As is known, commercially available have been bicycles, motorcycles, and the like, which are designed to be made more compact when not actually in use.

Most embodiments usually provide a main frame which may be folded up to reduce the frame length dimension.

Other approaches provide, for making the vehicle less unwieldy, for the possibility of disassembling some accessory items, such as the saddle holder, steering column  etc.,      thus removing those parts which have a substantially long dimension in a perpendicular direction to the length of the frame.

With all the prior embodiments, the operations involved in reducing the vehicles' overall dimensions generally require the  utilization of tools, and sometimes separation of component parts, thereby operations are to be carried out which, while not being complex, are time-consuming and inconvenient for the user.

Another drawback of the prior art approaches is that the reduction in overall dimensions is in many cases accomplished to the detriment of the vehicles' full functionality.

It is the aim of the invention, accordingly, to remove such prior drawbacks by providing a collapsible vehicle particularly of the two-wheeled type, which affords a significant reduction of the overall dimensions when the vehicle is not being used without requiring the use of tools of any description, and by merely performing quickly carried out operations that do not require any special skill of the user.

Within the above aim, it is a particular object of the invention to provide a collapsible vehicle, whereby the vehicle overall dimensions can be reduced without detaching any of its parts, thus facilitating all the operations and making the resulting unit rational and functional.

Another object of this invention is to provide a collapsible vehicle which, owing to its peculiar constructive characteristics can give full assurance of being reliable and safe to use.

A not least object of this invention is to provide a collapsible vehicle which can be easily formed from commercially available elements and materials, and is competitive from a purely economical standpoint.

The above aim, and these and other objects such as will be apparent hereinafter, are achieved by a collapsible vehicle particularly of the two-wheeled type, according to the invention, comprising a main frame supporting at least one rear wheel and a steering column pivotally connected to said main frame and supporting at least one front wheel, characterized in that it comprises a saddle holder connected to said main frame and tiltable toward said main frame to bring said saddle forward of the main frame, the upper section of said steering column being connected to said steering column for tilting toward said main frame, the handle bar sections connected to said' upper steering column section being tiltable toward said upper steering column section.

Further features and advantages will be apparent from the following description of a preferred, but not exclusive, embodiment of this collapsible vehicle particularly of the two-wheeled type, as illustrated by way of example and not of limitation in the accompanying drawings, where:

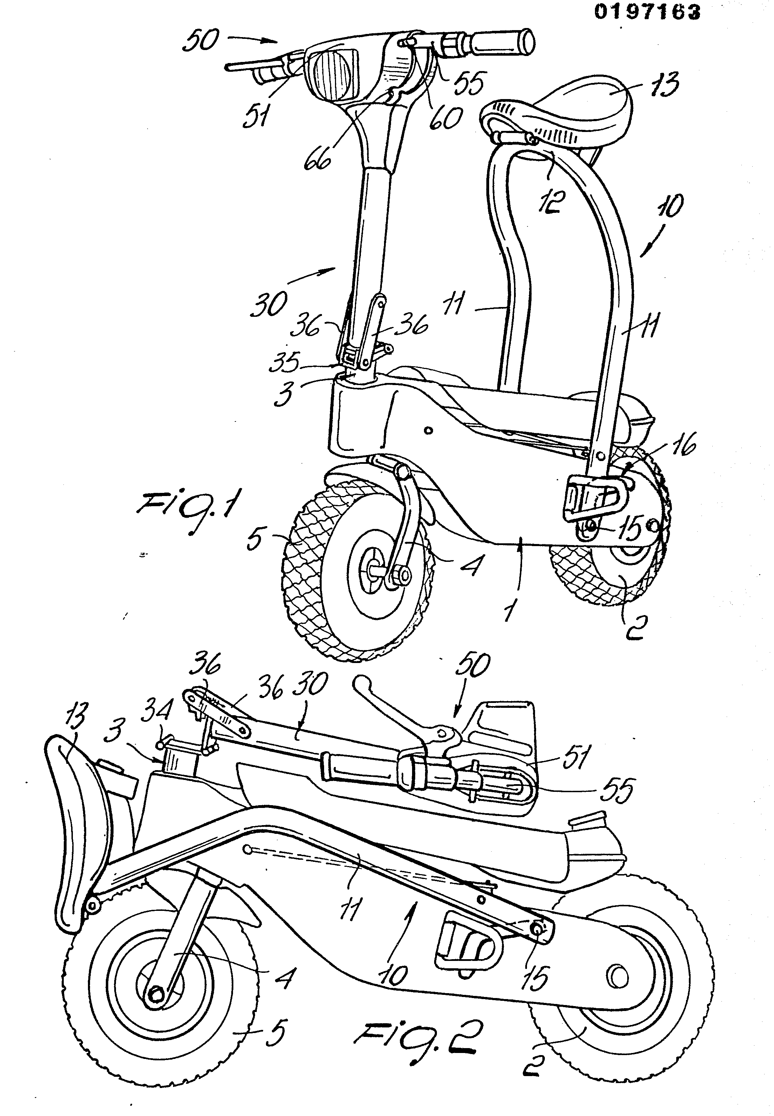

Figure 1 is a perspective view of this collapsible vehicle in its condition ready for use;

Figure 2 shows the vehicle in its collapsed or packed condition;

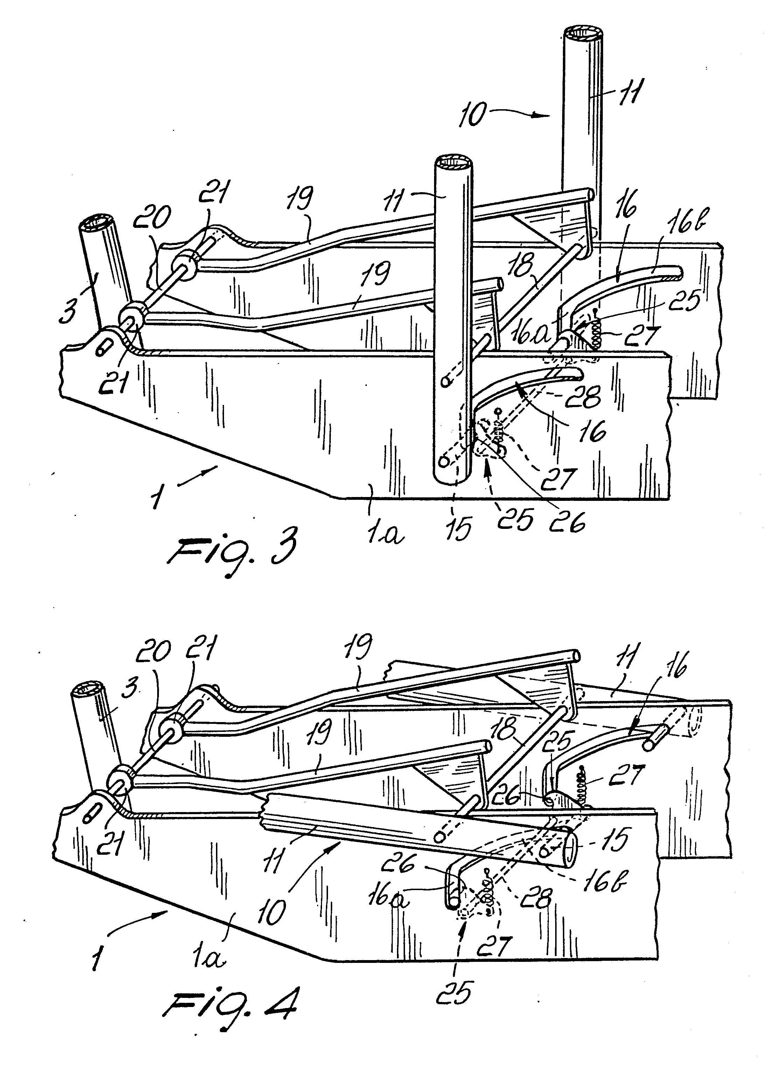

Figure 3 is a partly cut-away perspective view showing the positioning of the saddle holder in the condition for use;

Figure 4 shows schematically the saddle holder in its folded up condition;

Figure 5 is a perspective detail view of the steering column in its condition for use;

Figure 6 shows the steering column in its folded condition;

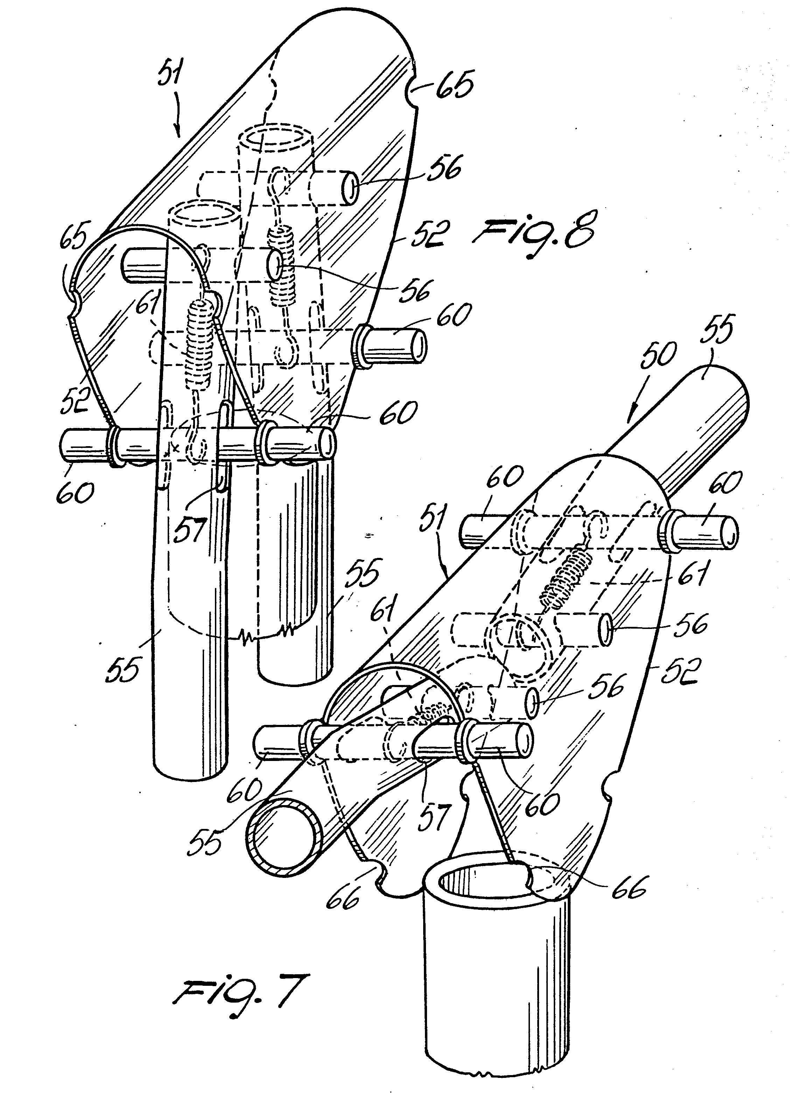

Figure 7 is a perspective view of the handle bar in its condition for use; and

Figure 8 is a detail view of the handle bar in its folded    condition.

With reference to the drawing figures, this collapsible vehicle particularly of the two-wheeled type is schematically depicted therein as a motorcycle, and may have, of course, any other suitable configuration; that vehicle comprises a main frame 1 which is advantageously of elongate box type design.

The frame 1 supports a front wheel, indicated at 2, and a steering column 3 connected pivotally to the frame 1. The steering column is connected to a front fork 4 whereto a front wheel 5 is connected.

A first feature of the invention is that the vehicle is provided with a saddle holder consisting of a rod-like body 10 which extends substantially into a U-like shape and has legs 11 which enclose the frame 1 laterally and are joined by a joining section 12 whereto the saddle 13 is connected.

The legs 11 of the rod-like body 10 have, at the bottom free ends thereof, pins 15, which may be replaced, however, with a single cross pin, which are engaged slidingly in contoured slots 16 defined on the sides 1a of the frame 1.

The contoured slots 16 have a substantially vertical section 16a, wherein the pins 15 are engaged, with the holder in its position for use, which merges with a mainly horizontal section 16b extending toward the rear of the frame 1.

The legs 11, at a middle portion thereof close to their free ends, are joined by a crosspiece 18 which is hinged to one end of rods 19 which are articulated with their other ends to a front crosspiece

0197163

20 carried on the sides 1a of the frame 1.

Advantageously, provided at the area of hinged connection between the front crosspiece 20 and rods 19 are rubber couplings 21 for damping any vibrations which may be generated.

The connection described above forms in practice a three-hinge arch consisting of the pins 15, crosspiece 18, and front crosspiece 20; the three-hinge arch is fixed, on locking the pin 15 in place, and in that position, supports the saddle holder 10 at a position close to the vertical.

The pins 15, as mentioned above, are received slidably within the slots 16 such that the holder 10 can be tilted toward the frame by utilizing the sliding travel of the free ends of the pins 15 towards the rear of the frame.

In the tilted position, the saddle 13 is located over the front wheel 5, forward of the frame.

To hold the pins 15 in their operating positions, ratchet pawls 25, advantageously hinged to the frame 1 and having a hooked end 26 in engagement with the pins 15 and at the other end a return spring 27 holding the pawls in the locked position, are provided.

For convenience in using the pawls 25, a joining rod 28 is provided which is passed through the frame sides and enables the pawls to be actuated simultaneously by acting on a single pawl.

With the arrangement described above, in order to tilt the saddle holder it will be sufficient to disengage the pawls 25, and in particular to move the

0197163

hooked end 26 away from the pin 15 against the bias of the return springs 27.

On disengaging, the pins 15 may be slid in the slots 16, thus moving the pins 15 rearward from the frame, with consequent tilting toward the front portion of the holder 10.

As pointed out hereinabove, the frame 1 supports a steering column 3 pivotally therein; the steering column 3 has an upper section, generally indicated at 30, which is connected to the lower section of the steering column 3 for hinged connection and consequent tilting movement about a perpendicular axis to the main axis of the steering column.

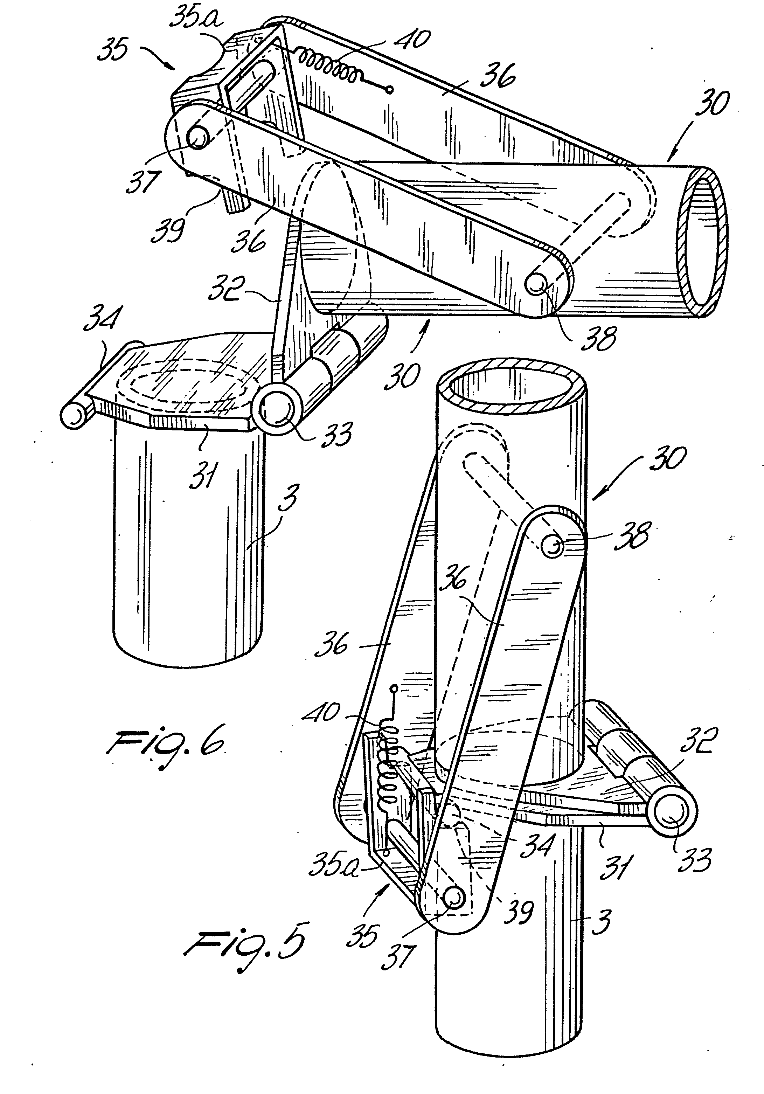

In detail, and as shown in Figures 5 and 6, the steering column 3 has a lower plate 31 connected thereto which is hinged to an upper plate 32 rigidly connected to the upper section 30.

The hinge axis, as mentioned previously, is substantially perpendicular to the main direction of the steering column 3.

The lower plate 31 has, at the remote end from the hinge 33 connecting it to the upper plate 32, a cross detent 34 which may be hooked by the end of a stirrup 35 of substantially U-like shape which is hinged at 37 to the bottom ends of connecting rods 36 which are hinged with their other ends at 38 to the upper section 30.

The stirrup 35 has, at the free ends of its legs, a hooking portion 39 which engages with the detent 34.

An elastic means is then provided which comprises a spring 40 connected between a connecting rod 36 and the joining section 35a of the stirrup 35, which is located remotely from the hinge axis 37 with respect to the hooking portions 39.

With the arrangement described above, and with the steering column in its position for use, arrangements are provided whereby any pull exerted on the upper section 30 contributes toward an increase of the section clamping action relatively to the column 3, in fact, a line joining the hinge points 37 and 38 would be positioned toward the steering column and the detent 34 be positioned on the opposite side of the cited line from the steering column, thereby the pull actions exerted will tend to further close the connection.

To disengage, it will be sufficient to act on the stirrup 35 against the bias of the spring 40, thus disengaging the hooking portion 39 from the detent 34, in order to effect the rotation of the upper section 30 which tilts down onto the frame 1 by turning rearwardly.

In order to effect positioning in the position for use it will be sufficient to turn the section 30 in the opposite direction with a coupling which practically occurs with a snap action because, on aligning the hinge points 37 and 38 with the detent 34, any further rotary action toward the vertical position is facilitated by the bias force of the return spring 40.

Connected to the top end of the upper section 30 is a handle bar, generally indicated at 50, which has a center body 51 connected to the top end of the section 30 and curved side edges 52 which perform a camming function.

The center body 51 is connected as by hinges to the inward ends of the sections 55 of the handle bar through hinge pins 56 which are carried on the center body.

The sections 55 have, at a portion thereof close to the hinge pins 56, slots 57 elongated in the axial direction, which receive slidably therein cross pins 60 which act by contact on the cited side edges 52 of the center body 51.

Between the hinge pins 56 and cross pins 60 there act elastic means comprising traction springs 61 which hold the pins 60 pressed elastically against the edges 52.

The edges 52 define upper notches 65 wherein the pins 60 are inserted to lock the sections 55 in the open position for use. Also provided on the edges 52 are lower notches 66 wherein the pins 60 are engageable to lock the sections 55 in a position close against the upper section 30.

The edges 52 are shaped to vary the elastic action of the traction springs 61, so as to adjust the force which holds the sections 55 in the set position.

To move from one position to the other, it will be sufficient to apply a pulling force on the cross pins 60 and disengage them from the respective coupling notches, and then effect the rotation of the sections 55 about the hinge pins 56 until the cross pins 60 fit in the other notch which corresponds to the other position that the sections 55 may assume.

It may be appreciated from the foregoing that, with the constructional expedients discussed, a vehicle can be realized which is truly collapsible utilizing the tiltability of the saddle holder, steering column, and handle bar.

In practical use, to fold up the vehicle and bring it to its collapsed condition, it will be sufficient to first fold the sections 55 against the upper section 30 by acting, as previously indicated, on the cross pins 60 which can slide in the elongate slots 57.

Then the upper section 30 of the steering column is tilted down after disengaging the stirrup 35 from the detent 34 against the bias of the spring 40.

Thereafter, the saddle holder is tilted down by pivoting it toward the front, utilizing the sliding feature of the pins 15 in the contoured slot 16 defined in the main frame sides, thereby the holder 10 can be folded laterally to the frame to bring the saddle 13 to the front of the frame.

The invention herein is susceptible to many modifications and changes without departing from the purview of the inventive concept.

Furthermore, all of the details may be replaced with other, technically equivalent elements.

In practicing the invention, the materials used, so long as compatible with the specific use, as well as the dimensions and contingent shapes may be any ones depending on requirements.

CLAIMS

1. A collapsible vehicle particularly of the two-wheeled type, comprising a main frame (1) supporting at least one rear wheel (2) and a steering column (3) pivotally connected to said main frame (1) and supporting at least one front wheel (5), characterized in that it comprises a saddle (13) holder (10) connected to said main frame (1) and tiltable toward said main frame (1) to bring said saddle (13) forward of the main frame (1), the upper section (30) of said steering column (3) being connected to said steering column (3) for tilting toward said main frame (1), the handle bar (50) sections (55) connected to said upper steering column section (30) being tiltable toward said upper steering column section (30).

2. A vehicle according to Claim 1, characterized in that said saddle holder has a rod-like body (10) having a substantially U-like configuration with the legs (11) thereof arranged laterally to said main frame (1), at the free ends of said legs (11) there being provided pins (15) engageable in contoured slots (16) defined by said main frame (1), with a middle portion of said legs (11) there being hinged the ends of rods (19) hinged with the other ends to a front crosspiece (20) carried on said main frame (1).

3. A vehicle according to the preceding claims, characterized in that it comprises ratchet pawl means (25) hinged to said main frame (1) and having a hooked end (26) engageable with said pins (15) to lock them in said slots (16), on the other end of said hooked elements (25) there acting elastic means in the form of a return spring (27) adapted to hold said hooked end (26) elastically engaged with said pins (15).

4. A vehicle according to one or more of the preceding claims, characterized in that said slots (16) have a portion extending substantially vertically (16a) engageable by said pins (15) with said holder (10) in position for use, said substantially vertical portion (16a) merging with an essentially horizontal portion (16b) extending toward the rear of said main frame (1) and engageable by said pins (15) to tilt said saddle holder (10) toward said main frame (1).

5. A vehicle according to one or more of the preceding claims, characterized in that said rods (19) are hinged to said front crosspiece (20) with the interposition of rubber couplings.

6. A vehicle according to one or more of the preceding claims, characterized in that said upper section (30) is connected to said steering column (3) for rotation about a substantially perpendicular axis to the direction of said steering column (3).

7. A vehicle according to one or more of the preceding claims, characterized in that it comprises a lower plate (31) connected to said steering column (3) and an upper plate (32) rigidly connected with said upper section (30) and hinged to said lower plate (31) for rotation about a substantially perpendicular axis to the axis of said steering column, there being further provided a locking means active between said upper section (30) and said steering column (3).

8. A vehicle according to one or more of the preceding claims, characterized in that said locking means comprises a detent (34) rigidly connected to said lower plate (31), on the remote side to the hinge between said lower plate (31) and said upper plate (32), with said detent (34) there engaging the hooking portion (39) placed at the end of a stirrup (35) carried oscillably about a first axis (37) on the end of connecting rods (36) connected, at the other end thereof, to said upper section (30) for oscillation about a second axis (38).

9. A vehicle according to one or more of the preceding claims, characterized in that it comprises an elastic means in the form of a spring (40) acting between at least one of said connecting rods (36) and the joining portion (35a) of said stirrup (35) located on the opposite side to said shaped portion (39) with respect to the first hinge axis (37) of said stirrup (35).

10. A vehicle according to one or more of the preceding claims, characterized in that, with said upper section (30) aligned with said steering column (3), said detent (34) is located on the opposite side to said steering column (3) with respect to a line joining said first (37) with said second (38) axis.

11. A vehicle according to one or more of the preceding claims, characterized in that said sections (55) of the handle bar (50) are hinged to a center body (51) attached to the top end of said upper section (30).

0197163

12. A vehicle according to one or more of the preceding claims, characterized in that said center body (51) has cam-shaped side edges (52) engageable by contact by cross pins (60) carried on said handle bar sections (55) for sliding in slots (57) elongated in the axial direction of said sections (55), also provided being elastic means comprising tension springs (61) acting between said pins (60) and the hinge pin (56) between said sections (55) and said center body (51).

13. A vehicle according to one or more of the preceding claims, characterized in that said side edges (52) of said center body (51) are provided with lower notches (66) and upper notches (65) for locking said handle bar sections (55) in place, respectively at a position for use and a folded position.

0197163

Fig.1

Fig.2

0197163

Fig. 3

Fig. 4

0197163

35.a

35

40

36

30

37

39

36

32

34

30

38

34

31

3

30

36

38

36

36

40

32

34

35.a

31

33

Fig.6

3

35

39

Fig.5

37

0197163

Fig.8

Fig.7

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 384 667 (TOMY KOGYO CO., LTD.)<br>* Page 3, lines 18-40; pages 4-9; figures 1-13 * | 1 | B 62 K 15/00 |
| A | WO-A-8 303 232 (CSIZMADIA)<br>* Page 6, lines 15-35; pages 7-11; figures 1-12 * | 1 | |

|  |  |
|---|---|
|  | TECHNICAL FIELDS SEARCHED (Int. Cl.4) |
|  | B 62 K |

The present search report has been drawn up for all claims

| Place of search | Date of completion of the search | Examiner |
|---|---|---|
| THE HAGUE | 12-11-1985 | VANNESTE M.A.R. |